Europäisches Patentamt

European Patent Office

Office européen des brevets

(11) Veröffentlichungsnummer: **0 284 631**
**A1**

(12) **EUROPÄISCHE PATENTANMELDUNG**

(21) Anmeldenummer: 87104685.0

(22) Anmeldetag: 30.03.87

(51) Int. Cl.⁴: **E02B 3/06**

(43) Veröffentlichungstag der Anmeldung:
05.10.88 Patentblatt 88/40

(84) Benannte Vertragsstaaten:
**BE ES FR GB IT NL SE**

(71) Anmelder: **Bestmann, Lothar**
**Taubenstrasse 96**
**D-2080 Pinneberg(DE)**

Anmelder: **Backhaus, Jan, Dr.**
**Westerladekop 119**
**D-2155 Jork(DE)**

(72) Erfinder: **Bestmann, Lothar**
**Taubenstrasse 96**
**D-2080 Pinneberg(DE)**
Erfinder: **Backhaus, Jan, Dr.**
**Westerladekop 119**
**D-2155 Jork(DE)**

(74) Vertreter: **Struck, Willi, Dr.-Ing.**
**Friedrich-Ebert-Strasse 10f**
**D-2080 Pinneberg(DE)**

(54) **Verfahren und Vorrichtung zum Dämpfen der Oberflächenwellen auf Gewässern.**

(57) Die Erfindung betrifft ein Verfahren und eine Vorrichtung zum Dämpfen der Oberflächenwellen auf Gewässern, insbes. auf dem Meer und bezweckt mit relativ geringem baulichen Aufwand weitgehend die oberflächendämpfende Wirkung eines treibenden Eisfeldes zu erreichen.

Erfindungsgemäß wird dazu vorgeschlagen, in das Meeresgebiet, in dem die Dämpfung der Wellen vorgenommen werden soll, ein schwimmfähiges, ebenes, flächenhaftes, elastisch verformbares, massearmes Gitternetz (10), dessen Abmessungen, Konfiguration seiner Elemente (11) sowie seine Lage auf das Spektrum des anfallenden Seeganges abgestimmt sind zu verbringen und dort raumfest aber flexibel zu verankern.

Fig. 2

## Verfahren und Vorrichtung zum Dämpfen der Oberflächenwellen auf Gewässern

Die ERfindung betrifft ein Verfahren und eine Vorrichtung zum Dämpfen der Oberflächenwellen auf Gewässern, insbes. auf dem Meer.

Es ist bekannt, daß im offenen Wasser treibende Eisfelder, d. h. Ansammlungen von nicht zusammengefrorenen Eisschollen verschiedener Form und Größe extrem dämpfend auf Oberflächenwellen wirken, so daß diese, wenn die Eisfelder nur groß genug sind nach passieren des Feldes nahezu vollständig ausgelöscht sind. Einzelne treibende Eisschollen, deren Abmessungen geringer als die halbe Wellenlänge sind, können nicht dämpfend wirken, da sie weitgehend ungehindert auf den Oberflächenwellen schwimmen. Erst die ständige Behinderung durch benachbarte Eisschollen im Eisfeld wirkt dämpfend. Die an den Rändern der Eisschollen vernichtete Reibungsenergie wird den Wellen entzogen, denn die in ihrer Bewegungsfreiheit eingeschränkten Schollen üben rücktreibende Kräfte af die Oberfläche aus.

Die durch treibende Eisfelder verursachte Wellendämpfung hat zwei Ursachen. Einmal die Energievernichtung an den Rändern einzelner Eisschollen, Dämpfung der Schwimmbewegung und damit der Oberflächenauslenkung und zum anderen die Energievernichtung an der Unterseite der Schollen, Dämpfung der oberflächennahen Strömungsfluktuation im Wellenfeld (Orbitalbewegung).

Durch die vorliegende Erfindung soll nun die Aufgabe gelöst werden, ein Verfahren und eine Vorrichtung zu schaffen, bei der die oberflächenwellendämpfende Wirkung eines treibenden Eisfeldes weitgehend erreichbar ist, wobei der bauliche Aufwand relativ gering bleibt.

Zur Lösung dieser Aufgabe wird bei einem Verfahren der eingangs beschriebenen Art vorgeschlagen, in das Meeresgebiet, in dem die Dämpfung der Wellen vorgenommen werden soll, ein schwimmfähiges, ebenes, flächenhaftes, elastisch verformbares, massearmes Gitternetz dessen Abmessungen, Konfiguration seiner Elemente sowie seine Lage auf das Spektrum des anfallenden Seeganges abgestimmt sind zu verbringen und dort raumfest aber flexibel zu verankern.

Es ist zwar schon eine als Wellenbrecher bezeichnete Vorrichtung bekannt geworden, bei der Körper unter Bildung dreieckiger Zwischenräume gitterartig miteinander verbunden sind, um die Oberflächenwellen zu dämpfen (DE-Ps 25 24 442), bei dieser Vorrichtung sollen aber durch die Körper bzw. durch deren sich senkrecht in das Wasser erstreckende Flächen Reflexionsflächen gebildet werden, an denen die Wellen reflektiert werden oder sich brechen. Mit dieser Vorrichtung kann keine oder nur eine geringe Dämpfung der Oberflächenwellen erreicht werden, insbesondere dann, wenn es sich um sehr große Oberflächenwellen, wie sie auf dem offenen Meer vorkommen handelt. Im übrigen ist der bauliche Aufwand dabei erheblich.

Bei dem erfindungsgemäßen Verfahren sollen die elastischen Verformungseigenschaften des Gitternetzes sowohl durch die Wahl des Materials als auch durch die Abmessungen des Gitters und der Gitterelemente bestimmt werden.

Es hat sich als zweckmäßig erwiesen, zur Verstärkung des Gitternetzes regionale Verfeinerungen seiner Elemente vorzunehmen, die den punktuellen Zug der Verankerungen auf das Gitternetzt verteilen. Zur Verankerung des Gitternetzes können außerdem die mechanischen Belastungen des Gitternetzes minimierende und die Schwimmeigenschaften des Gitternetzes bewahrende Verankerungen eingesetzt werden, deren Zugkräfte im Niveau der Meeresoberfläche horizontal am Gitternetz angreifen.

Bei einer bevorzugten Ausführungsform der Erfindung soll das Gitternetz auf das Spektrum des Seeganges abgestimmt sein und normal zu den Wellenfronten des einfallenden Seeganges eine Erstreckung aufweisen, diegleich oder größer ist als die dreifache Wellenlänge.

Bei einer Vorrichtung zur Druchführung des erfindungsgemäßen Verfahrens soll das flächige Gitternetz aus miteinander verbundenen - schwimmfähigen Elementen, wie Stangen, Rohren, Streifen oder dergl. zusammengesetzt sein, wobei bei nicht schwimmfähigen Materialien die Schwimmfähigkeit auch durch besondere Auftriebselemente sichergestellt werden kann. Die Elemente des Gitternetzes können unmittelbar miteinander verbunden werden, z.B. bei streifenförmigem Material, sie können aber auch durch besondere Knoten fest oder lösbar miteinander in Verbindung stehen. Die Knoten können in unterschiedlicher Weise, wie aus den Merkmalen der Unteransprüche ersichtlich, ausgeführt sein.

Es hat sich als vorteilhaft erwiesen, die Elemente mit den Knoten als vorzugsweise als gleichseitige Dreiecke bzw. Polygone, die sich geometrisch aus gleichseitigen Dreiecken ergeben, ausgeführte Moduln zu Gitternetzen zusammenzusetzen.

Die Erfindung kann zum Schutz der Küste, sowie Objekten wie Häfen, Off-shore-Bauten, Fischfarmen oder dergl. gegen den Angriff von Oberflächenwellen eingesetzt werden oder auch zur Schaffung beruhigter Wasserzonen z.B. bei Ölunfällen oder auch um die Bildung von künstlichen Barren durch Sedimentation zu begünstigen. Dabei können dann die Gitternetze nach der Ausbildung der Barren wieder entfernt und danach anderswo eingesetzt werden.

Auf den Zeichnungen sind Ausführungsbeispiele für Gitternetze und Knoten dargestellt. Dabei zeigen

Fig. 1 ein Gitternetz mit Knotenverbindungen,

Fig. 2 ein Gitternetz aus streifenförmigem Material,

Fig. 3 ein Gitternetz mit verdichteten Bereichen,

Fig. 4 einen Knoten mit Halteaugen zur Anbringung der Zugstangen der Elemente,

Fig. 5 einen voll ausgebildeten Knoten mit Elementen,

Fig. 6 eine andere Ausführungsform eines Knotens mit der Anbringung der Elemente,

Fig. 7 ein Ausführungsbeispiel einer Klammer zur Verbindung von Lochplatten zu einem Gitternetz im Schnitt,

Fig. 8 die Anordnung der Verbindungsnoppen über die Länge der Klammer und

Fig. 9 ein Gitternetz aus aus gleichseitigen Dreiecken bestehenden Lochplatten.

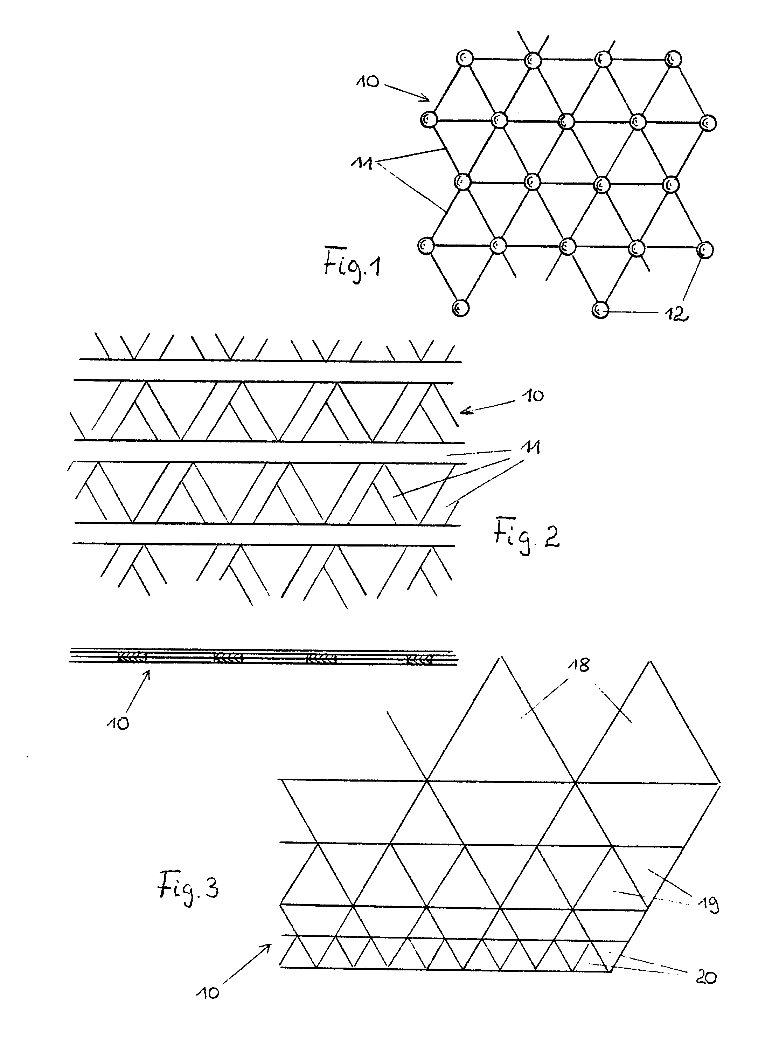

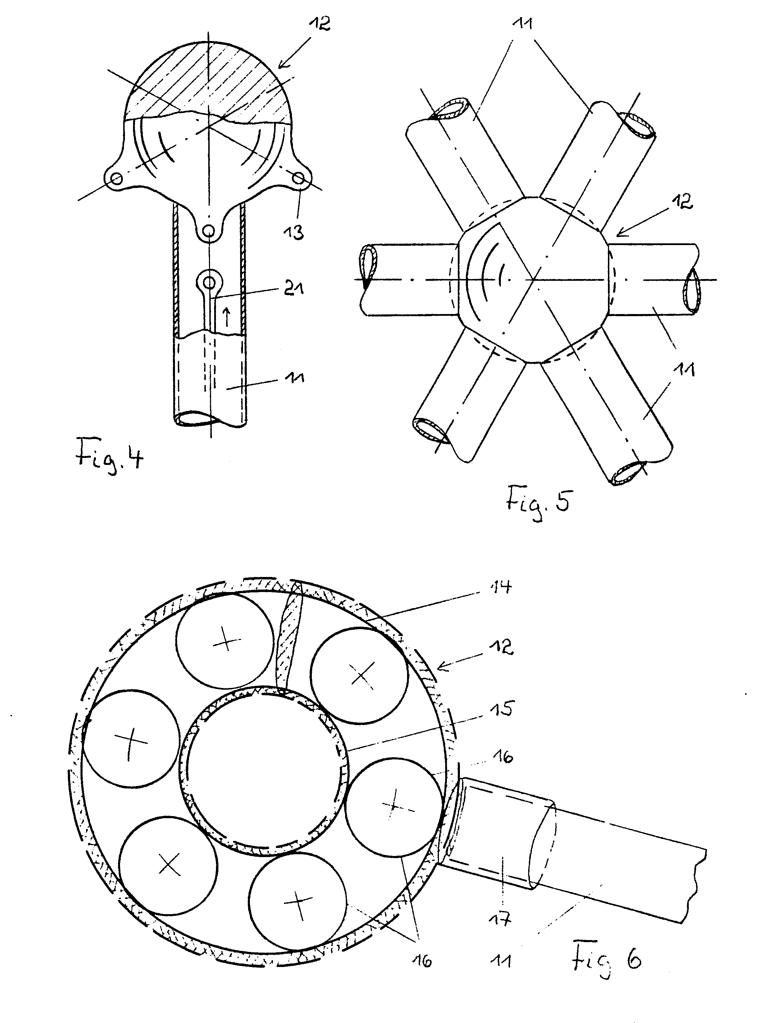

Die Gitternetze der Fig. 1 bis 3, sind ganz allgemein mit 10 bezeichnet, die Elemente mit 11 und die Knoten mit 12. Dabei zeigt Fig. 1 ein Gitternetz 10 bei dem stangen-oder rohrförmige Elemente 11 durch Knoten miteinander verbunden sind.

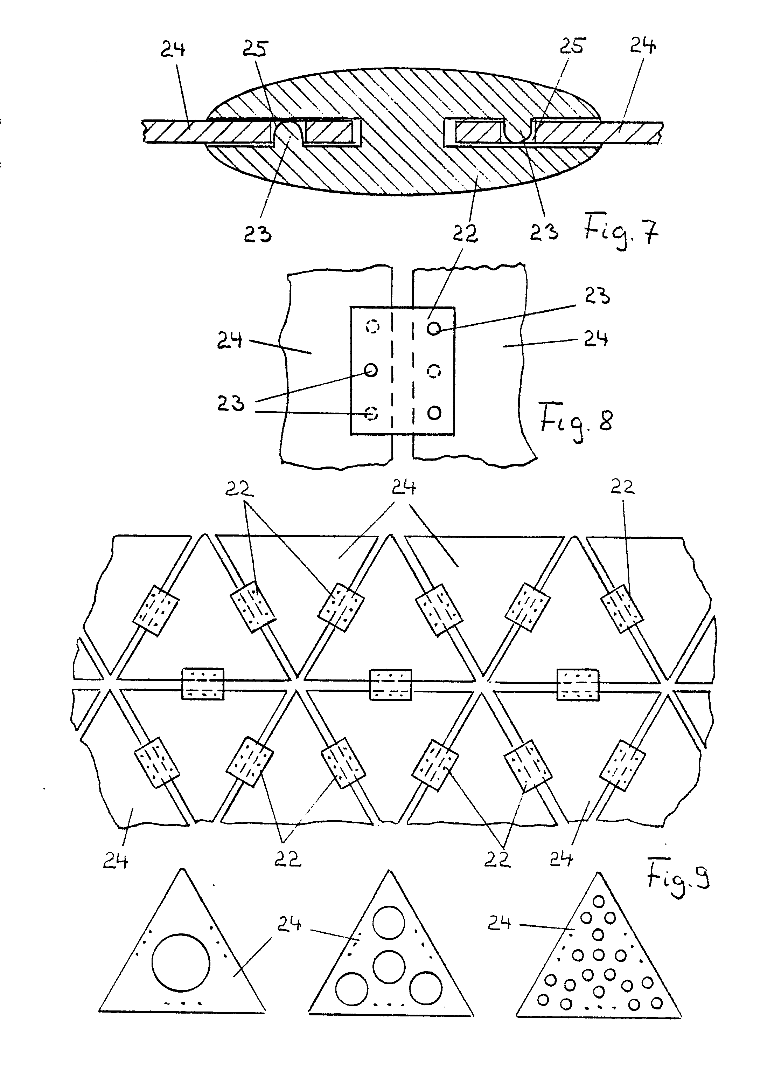

Das Gitternetz 10 der Fig. 2 besteht, wie man erkennen kann aus streifenförmigen Elementen 11, die unmittelbar miteinander verbunden sind und so ein besonders einfaches Gitternetz bilden. Fig. 3 läßt ein Gitternetz erkennen, welches in bestimmten Bereichen verdichtet ist zur besseren Aufnahme und Verteilung der Kräfte. Dieses Gitternetz ist aus Moduln 18, 19, 20 unterschiedlicher Größe zusammengesetzt.

Die Fig. 4 bis 6 lassen unterschiedliche Knoten 12 erkennen. Dabei sind die Knoten der Fig. 4 und 5 kugelförmig ausgebildet. Der Knoten der Fig. 4 weist Augen 13 auf, an denen Spanngestänge 21 für die Befestigung der Elemente 11 vorgesehen sind. Bei dem Knoten 12 der Fig. 5 sind eine Vielzahl von Elementen 11 unmittelbar an dem kugelförmigen Knoten 12 angebracht.

Der Knoten der Fig. 6 besteht aus einem elastischen Außenring 14 einem ebenfalls elastischen Innenring 15, sowie diese beiden Ringe gegeneinander abstützende, gleichfalls elastische Zwischenringe 16. Zum Schutz gegen Korrosion sind die Ringe in eine Gummischicht eingebettet. Die Elemente 11 sind an dem Knoten 12 durch Befestigungsvorrichtungen 17 gehalten.

In Fig. 7 ist eine Klammer 22 mit Noppen 23 dargestellt, die zur Verbindung von Lochplatten 24, die in Fig. 9 als Dreieckplatten ausgeführt sind, zu einem Gitternetz dient. Fig. 8 läßt erkennen, wie die Noppen 23 teils von oben teils von unten in Öffnungen 25 in den Platten 24 eingreifen. Die Klammern können aus elastischem Material ausgeführt sein, so daß die Platten 24 in die Schlitze in den Klammern unter elastischer Aufweitung der Schlitze eingeschoben werden bis die Noppen 23 in dafür vorgesehene Öffnungen 25 in den Platten 24 einschnappen, womit die Verbindung hergestellt ist. Statt Noppen können die Klammern 22 auch einfache Durchgangsbohrungen aufweisen und die Verbindung durch Einsteckbolzen geeigneter an sich bekannter Art hergestellt werden.

Statt Dreieckform können die Gitterplatten natürlich auch jede andere geeignete Form aufweisen, beispielsweise Rechteck-, Quadrat-, Sechseckform oder dergl.

## Ansprüche

1. Verfahren zum Dämpfen der Oberflächenwellen auf Gewässern, insbes. auf dem Meer, dadurch gekennzeichnet, daß in das Meeresgebiet, in dem die Dämpfung der Wellen vorgenommen werden soll, ein schwimmfähiges, ebenes, flächenhaftes, elastisch verformbares, massearmes Gitternetz verbracht und dort raumfest aber flexibel verankert wird.

2. Verfahren nach Anspruch 1, dadurch gekennzeichnet, daß die elastischen Verformungseigenschaften des Gitternetzes, sowohl durch die Wahl des Materials als auch durch die Abmessungen des Gitters und der Gitterelemente bestimmt wird.

3. Verfahren nach Anspruch 1 und 2, dadurch gekennzeichnet, daß zur Verstärkung des Gitternetzes regionale Verfeinerungen seiner Elemente vorgenommen werden, die den punktuellen Zug der Verankerungen auf das Gitternetz verteilen.

4. Verfahren nach Anspruch 1 bis 3, dadurch gekennzeichnet, daß zur Verankerung des Gitternetzes die mechanischen Belastungen des Gitternetzes minimierende und die Schwimmeigeschaften des Gitternetzes bewahrende Verankerungen eingesetzt werden,deren Zugkräfte im Niveau der Meeresoberfläche horizontal am Gitternetz angreifen.

5. Verfahren nach Anspruch 1 bis 4, dadurch gekennzeichnet, daß das Gitternetz auf das Spektrum des Seeganges abgestimmt ist und normal zu den Wellenfronten des einfallenden Seeganges eine Erstreckung gleich oder größer als die dreifache Wellenlänge aufweist.

6. Vorrichtung zur Durchführung des Verfahrens nach Anspruch 1 bis 5, dadurch gekennzeichnet, daß das flächige Gitternetz (10) aus miteinander verbundenen schwimmfähigen Elementen (11) wie Stängen, Rohren, Streifen, Lochplatten oder dergl. zusammengesetzt ist.

7. Vorrichtung nach Anspruch 6, dadurch gekennzeichnet, daß die Elemente (11) des Gitternetzes (10) aus hochfestem Kunststoffmaterial, aus korrosionsfreiem Stahl, Nichteisen metallen, Verbundkunststoffen oder Holz bestehen.

8. Vorrichtung nach Anspruch 6 und 7, dadurch gekennzeichnet, daß die Elemente (11) des Gitternetzes (10) durch Knoten (12), Klammern oder dergl. lösbar miteinander verbunden sind.

9. Vorrichtung nach Anspruch 6 bis 8, dadurch gekennzeichnet, daß die Knoten (12) mit den Elementen (11) als beliebig zusammensetzbare Moduln (18, 19, 20), vornehmlich gleichseitige Dreiecke bzw. Polygone, die sich geometrisch aus gleichseitigen Dreiecken ergeben, ausgeführt sind.

10. Anwendung des Verfahrens und der Vorrichtung nach Anspruch 1 bis 9, dadurch gekennzeichnet, daß das Gitternetz (10) dem Schutz der Küste, sowie Objekten wie Häfen, Off-shore-Bauten, Fischfarmen oder dergl. gegen den Angriff von Oberflächenwellen und zur Schaffung von beruhigten Wasserzonen bei Unfällen auf dem Meer wie Ölunfällen oder dergl. sowie zur Bildung künstlicher Barren durch Sedimentation vor der Küste dient.

Fig.1

Fig. 2

Fig. 3

Fig. 4

Fig. 5

Fig. 6

Fig. 7

Fig. 8

Fig. 9

# EUROPÄISCHER RECHERCHENBERICHT

Nummer der Anmeldung

EP 87 10 4685

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 006 689 (DESTY) <br> * Zusammenfassung; Ansprüche; Figur 1 * <br> --- | 1,2,6-8 ,10 | E 02 B 3/06 |
| A | US-A-2 388 171 (McVITTY) <br> * Insgesamt * <br> --- | 1-4,6,7 ,10 | |
| A | FR-A-1 527 731 (ESSO STANDARD) <br> * Seite 2; Figuren 4,7,8 * <br> --- | 1,4,6,7 ,10 | |
| A,D | DE-A-2 524 442 (WATSON) <br> * Ansprüche; Figuren 1,2,6 * <br> --- | 6-10 | |
| A | FR-A-2 359 937 (DESTY) <br> ----- | | |

| | RECHERCHIERTE SACHGEBIETE (Int. Cl.4) |
|---|---|
| | E 02 B |

Der vorliegende Recherchenbericht wurde für alle Patentansprüche erstellt

| Recherchenort | Abschlußdatum der Recherche | Prüfer |
|---|---|---|
| DEN HAAG | 26-11-1987 | HANNAART J.P. |